# EUROPEAN PATENT APPLICATION

(11) **EP 4 764 941 A1**
(43) Date of publication of application: **24.06.2026**
(21) Application number: 25169471.7
(22) Date of filing: 09.04.2025
(51) Int. Cl.: G06F 40/30

(54) **APPLICATION-AWARE MODEL-BASED ASSISTANT**

(30) Priority: 23.12.2024 US 202463738040 P; 19.03.2025 US 202519084540
(71) Applicant: Palantir Technologies Inc., Aventura, Florida 33180 (US)
(72) Inventor: COPES, Martin, Denver, 80202 (US); KINDBLOM, Marie, Denver, 80202 (US); TRACHE, Mohamed Zaki, Denver, 80202 (US); RUSAK, Damian, Denver, 80202 (US)
(74) Representative: Sayer, Robert David

(57) **Abstract**

Computer-implemented systems and methods including language models for providing an application-aware model-based assistant. A computer-implemented method, for communicating with a front end device to generate application specific recommended actions, may include: determining lists of available global and application actions; receiving a user query; generating a first prompt for a language model and providing a first response for display to the user; generating a second prompt for a language model; and in response to receiving an output: parsing the output to generate a list of recommended actions, and providing a second response for display to the user, where the second response includes the third list of recommended actions.

## Description

### CROSS-REFERENCE TO RELATED APPLICATIONS

This application claims benefit of U.S. Provisional Patent Application No. 63/738040, filed December 23, 2024, and titled "APPLICATION-AWARE MODEL-BASED ASSISTANT." The entire disclosure of each of the above items is hereby made part of this specification as if set forth fully herein and incorporated by reference for all purposes, for all that it contains.

Any and all applications for which a foreign or domestic priority claim is identified in the Application Data Sheet as filed with the present application are hereby incorporated by reference under 37 CFR 1.57 for all purposes and for all that they contain.

### TECHNICAL FIELD

The present disclosure relates to systems and techniques for utilizing computer-based models for predicting or recommending processing actions of a computer application which the user may initiate via a user input mechanism. More specifically, the present disclosure relates to computerized systems and techniques including a software protocol and large language model for accessing and implementing global and application actions with natural language processing.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Software applications can include many available actions. Large language model can produce responses to user queries in a natural language format.

### SUMMARY

The systems, methods, and devices described herein each have several aspects, no single one of which is solely responsible for its desirable attributes. Without limiting the scope of this disclosure, several non-limiting features will now be described briefly.

Software applications can be supported with assistant applications, separate and often complementary sets of programs which in some way support or provide additional functionality for software applications, for example additional executable functions (global functions or actions) that may be other than that or those provided by the software applications alone and of which the user may not be aware. For example, an assistant application can provide an ability for a software application to receive a weather report. Assistant applications can additionally be configured to provide natural language processing ("NLP") features. NLP is a field of artificial intelligence which enables computers to understand, interpret, generate, and respond to human language in a way that is both meaningful and useful. An application of natural language processing can be generation of computer-readable commands, instructions in a format which can be executed by a computer. If an assistant application is presented with necessary context, the assistant application can apply NLP to generate one or more lists of actions (e.g., computer functions which can be performed so as to achieve some result) capable of being performed independently or in support of or in relation to one or more software applications. For example, the actions may comprise executable actions such as, but not limited to, data analysis, data retrieval, data synchronization, encryption, decryption, control of hardware such as external machinery or external computers and so on. However, supplying the necessary context to an assistant application to facilitate generation of such actions may not be available with current protocols and software operations. As each software application and assistant application can contain unique actions, actions provided through NLP (which may be based on statistical trends and not tailored or unique) are likely to be inapplicable to, and unusable by, software applications and assistant applications. Generally, human input is necessary to determine and recommend relevant actions which can be burdensome in terms of time and processing resources where, for example, the user needs to navigate the application and its potentially complex hierarchy of menus to find actions most appropriate to their requirement.

The present disclosure describes various implementations of methods and systems (generally collectively referred to herein as "a model-based assistant system" or simply "a system") for generating, and performing functionality of, an assistant application that can advantageously overcome the various technical challenges mentioned above, among other technical challenges. For example, various implementations of the systems and methods of the present disclosure can advantageously employ a software development format and internal logic to facilitate automated, and language model-based, generation and display of recommended global actions and application actions which are specific to a particular software application context. Such recommended actions can then be selected by a user, in response to which the system can automatically perform the actions (which may be based on functions and related action parameters associated with the actions) based on the context of the software application. Performing actions can include executing the actions, opening a link included in the actions, and/or emphasizing actionable user interface elements associated with the actions, among other possible actions. Advantageously, a back end system can receive, from a front end device (e.g., a client device executing a software application and the system), lists of available global actions and available application actions; receive, from the front end device, a user query; and generate prompts to cause a large language model ("LLM") (e.g., a machine learning model which can apply NLP) to generate output which recommends one or more of the actions along with action parameter values (if action parameter values are required) for performing the one or more actions. The system can present a user with the one or more recommended actions for selection and performance in response to natural language queries from the user. The user therefore does not need to navigate through a potentially complex list or hierarchy of available actions of the application to arrive at the action they require.

Furthermore, the system can, at the front end device, provide to the user an interactive graphical user interface (GUI). The GUI can include visual elements corresponding to actionable user interface elements and other displayed features corresponding to actions included in the assistant application and software applications with which the user is interacting. Advantageously, the front end device, via the assistant application, can determine available global actions and available application actions. The front end device can additionally determine associated context (contextual information related to the software application and assistant application) and receive a user query (e.g., via the assistant application). The front end device can provide the available global actions, available application actions, and context (including but not limited to the user query and contextual information) to the back end system. The recommended actions may therefore be derived from a potentially larger pool of actions comprising global actions and available application actions, yet may comprise a context-aware and therefore limited/focused list of actions, being those that the user is predicted to use, and which can be compactly presented in a graphical user interface (GUI) of, or associated with the assistant application thereby allowing the user to initiate such actions by means of a continued and/or guided human-machine interaction process. The system may strike a balance between, on the one hand, presenting a relatively large number of actions, most of which the user is unlikely to use or require, and, on the other hand, directing the user to initiate predicted actions via the GUI without, for example, having to understand or navigate a potentially complex set of menus or sub-menus of the application itself to arrive at the intended action. The front end device can receive one or more responses from the back end system, where the responses can include text replies to the user query and/or a list of recommended actions. In various implementations, the one or more responses can include both a text reply and the list of recommended actions. The text replies can be displayed to a user to provide a verbal reply to the user query. The list of recommended actions can be displayed to the user, where one or more of the recommended actions can be selected and performed. Advantageously, performing a selected recommended actions can include the front end device causing emphasis of an actionable user interface element on the interactive graphical user interface, where the user interface element is associated with the selected recommended action. Furthermore, performance of a selected recommended action can advantageously include application of recommended action parameter values (included in a response) and execution of the selected recommended action with the action parameter values. Additionally, performance of a selected recommended action can include opening of a link included in the selected recommended action.

Prompts generated by the system for transmission to an LLM can include a list of available global actions, a list of available application actions, context (which can include a user query, among other information), and/or instructions to direct the LLM to select available actions which are most applicable or relevant to the user query and generate a list of corresponding action parameter values for the actions. The instructions can additionally require the relevant actions and action parameter values (if appropriate) be presented in a specified format for example by instructing the LLM (e.g., as part of the prompt) to provide the relevant actions and parameter values in the specified format. The lists of available actions can include action descriptors associated with each of the available actions. Furthermore, the system can receive output from the LLM and parse the output to ensure compliance with the specified output, re-prompting the LLM if the parsing reveals a non-compliant format in the output. The compliant format may be one which the system is configured to decode and/or map to the corresponding actionable user interface element.

In general, the disclosed system can facilitate broad applicability of automated identification, recommendation, and performance of global actions and application actions, via NLP, to specific contexts of software applications.

Various implementations of the present disclosure provide improvements to various technologies and technological fields. For example, and as described above, the system may advantageously integrate with interactive graphical user interfaces and enable recommendation and performance of actions. Other technical benefits provided by various implementations of the present disclosure include, for example, facilitating selection of a recommended action and emphasis of a corresponding user interface element. Additionally, other technical benefits provided by various implementations of the present disclosure include, for example, identifying available actions with an assistant application and within software applications.

Additionally, various implementations of the present disclosure are inextricably tied to computer technology. In particular, various implementations rely on detection of user inputs via graphical user interfaces, calculation of updates to displayed electronic data based on those user inputs, automatic processing of related electronic data, application of language models and/or other artificial intelligence, and presentation of the updates to displayed information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various implementations cannot reasonably be performed by humans alone, without the computer technology upon which they are implemented. Further, the implementation of the various implementations of the present disclosure via computer technology enables many of the advantages described herein, including more efficient interaction with, and presentation of, various types of electronic data.

According to various implementations, large amounts of data are automatically and dynamically calculated interactively in response to user inputs, and the calculated data is efficiently and compactly presented to a user by the system. Thus, in some implementations, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable a user to more quickly and accurately access, navigate, assess, and digest the model-related data than previous systems.

Further, the interactive and dynamic user interfaces described herein are enabled by innovations in efficient interactions between the user interfaces and underlying systems and components. For example, disclosed herein is a protocol, format, and/or API contract for facilitating identification of actionable user interface elements and available actions. Additionally, disclosed here are improved methods for generating lists of recommended actions utilizing one or more LLMs, based on contextual information associated with software applications. According to various implementations, the system (and related processes, functionality, and interactive graphical user interfaces) can advantageously employ one or more LLMs for generating lists of recommended actions that correspond to actions contained within the software application and/or the assistant application. The one or more LLMs may further generate action parameter values associated with the recommended actions. Advantageously, the system can re-prompt the LLM to ensure the recommended actions and action parameter values conform to a specified format by generating prompts with instructions and context requesting such output.

Thus, various implementations of the present disclosure can provide improvements to various technologies and technological fields, and practical applications of various technological features and advancements. For example, as described above, existing computer-based model management and integration technology is limited in various ways, and various implementations of the disclosure provide significant technical improvements over such technology. Additionally, various implementations of the present disclosure are inextricably tied to computer technology. In particular, various implementations rely on operation of technical computer systems and electronic data stores, automatic processing of electronic data, and the like. Such features and others (e.g., processing and analysis of lists of available interactive user interface actions, user queries, prompts, responses, and user selections, and execution of actions, and/or the like) are intimately tied to, and enabled by, computer technology, and would not exist except for computer technology. For example, the interactions with, and management of, computer-based models described below in reference to various implementations cannot reasonably be performed by humans alone, without the computer technology upon which they are implemented. Further, the implementation of the various implementations of the present disclosure via computer technology enables many of the advantages described herein, including identification and execution of application-specific actions via natural language processing of user queries.

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums comprise program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums, or one or more computer-readable storage mediums, are disclosed, wherein the computer-readable storage medium(s) comprise program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1 is a block diagram illustrating an example model-based assistant system in an example computing environment, according to various implementations of the present disclosure;
FIG. 2 is diagram illustrating an example communication of the model-based assistant system, according to various implementations of the present disclosure;
FIG. 3A illustrates an example action definition, according to various implementations of the present disclosure;
FIG. 3B illustrates an example wrapper text, according to various implementations of the present disclosure;
FIG. 4A is an example interactive graphical user interface of the system, according to various implementations of the present disclosure;
FIG. 4B is another example interactive graphical user interface of the system, according to various implementations of the present disclosure;
FIG. 5A is a flowchart illustrating example operations and functionality of the system, according to various implementations of the present disclosure;
FIG. 5B is a flowchart illustrating additional example operations and functionality of the system, according to various implementations of the present disclosure; and
FIG. 6 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

### Overview

Software applications can be supported with assistant applications, separate and often complementary sets of programs which in some way support or provide additional functionality for software applications, for example additional executable functions (global functions or actions) that may be other than that or those provided by the software applications alone and of which the user may not be aware. For example, an assistant application can provide an ability for a software application to receive a weather report. Assistant applications can additionally be configured to provide natural language processing ("NLP") features. NLP is a field of artificial intelligence which enables computers to understand, interpret, generate, and respond to human language in a way that is both meaningful and useful. An application of natural language processing can be generation of computer-readable commands, instructions in a format which can be executed by a computer. If an assistant application is presented with necessary context, the assistant application can apply NLP to generate one or more lists of actions (e.g., computer functions which can be performed so as to achieve some result) capable of being performed independently or in support of or in relation to one or more software applications. For example, the actions may comprise executable actions such as, but not limited to, data analysis, data retrieval, data synchronization, encryption, decryption, control of hardware such as external machinery or external computers and so on. However, supplying the necessary context to an assistant application to facilitate generation of such actions may not be available with current protocols and software operations. As each software application and assistant application can contain unique actions, actions provided through NLP (which may be based on statistical trends and not tailored or unique) are likely to be inapplicable to, and unusable by, software applications and assistant applications. Generally, human input is necessary to determine and recommend relevant actions which can be burdensome in terms of time and processing resources where, for example, the user needs to navigate the application and its potentially complex hierarchy of menus to find actions most appropriate to their requirement.

The present disclosure describes various implementations of methods and systems (generally collectively referred to herein as "a model-based assistant system" or simply "a system") for generating, and performing functionality of, an assistant application that can advantageously overcome the various technical challenges mentioned above, among other technical challenges. For example, various implementations of the systems and methods of the present disclosure can advantageously employ a software development format and internal logic to facilitate automated, and language model-based, generation and display of recommended global actions and application actions which are specific to a particular software application context. Such recommended actions can then be selected by a user, in response to which the system can automatically perform the actions (which may be based on functions and related action parameters associated with the actions) based on the context of the software application. Performing actions can include executing the actions, opening a link included in the actions, and/or emphasizing actionable user interface elements associated with the actions, among other possible actions. Advantageously, a back end system can receive, from a front end device (e.g., a client device executing a software application and the system), lists of available global actions and available application actions; receive, from the front end device, a user query; and generate prompts to cause a large language model ("LLM") (e.g., a machine learning model which can apply NLP) to generate output which recommends one or more of the actions along with action parameter values (if action parameter values are required) for performing the one or more actions. The system can present a user with the one or more recommended actions for selection and performance in response to natural language queries from the user. The user therefore does not need to navigate through a potentially complex list or hierarchy of available actions of the application to arrive at the action they require.

Furthermore, the system can, at the front end device, provide to the user an interactive graphical user interface (GUI). The GUI can include visual elements corresponding to actionable user interface elements and other displayed features corresponding to actions included in the assistant application and software applications with which the user is interacting. Advantageously, the front end device, via the assistant application, can determine available global actions and available application actions. The front end device can additionally determine associated context (contextual information related to the software application and assistant application) and receive a user query (e.g., via the assistant application). The front end device can provide the available global actions, available application actions, and context (including but not limited to the user query and contextual information) to the back end system. The recommended actions may therefore be derived from a potentially larger pool of actions comprising global actions and available application actions, yet may comprise a context-aware and therefore limited/focused list of actions, being those that the user is predicted to use, and which can be compactly presented in a graphical user interface (GUI) of, or associated with the assistant application thereby allowing the user to initiate such actions by means of a continued and/or guided human-machine interaction process. The system may strike a balance between, on the one hand, presenting a relatively large number of actions, most of which the user is unlikely to use or require, and, on the other hand, directing the user to initiate predicted actions via the GUI without, for example, having to understand or navigate a potentially complex set of menus or sub-menus of the application itself to arrive at the intended action. The front end device can receive one or more responses from the back end system, where the responses can include text replies to the user query and/or a list of recommended actions. In various implementations, the one or more responses can include both a text reply and the list of recommended actions. The text replies can be displayed to a user to provide a verbal reply to the user query. The list of recommended actions can be displayed to the user, where one or more of the recommended actions can be selected and performed. Advantageously, performing a selected recommended actions can include the front end device causing emphasis of an actionable user interface element on the interactive graphical user interface, where the user interface element is associated with the selected recommended action. Furthermore, performance of a selected recommended action can advantageously include application of recommended action parameter values (included in a response) and execution of the selected recommended action with the action parameter values. Additionally, performance of a selected recommended action can include opening of a link included in the selected recommended action.

Prompts generated by the system for transmission to an LLM can include a list of available global actions, a list of available application actions, context (which can include a user query, among other information), and/or instructions to direct the LLM to select available actions which are most applicable or relevant to the user query and generate a list of corresponding action parameter values for the actions. The instructions can additionally require the relevant actions and action parameter values if appropriate) be presented in a specified format for example by instructing the LLM (e.g., as part of the prompt) to provide the relevant actions and parameter values in the specified format. The lists of available actions can include action descriptors associated with each of the available actions. Furthermore, the system can receive output from the LLM and parse the output to ensure compliance with the specified output, re-prompting the LLM if the parsing reveals a non-compliant format in the output. The compliant format may be one which the system is configured to decode and/or map to the corresponding actionable user interface element.

In general, the disclosed system can facilitate broad applicability of automated identification, recommendation, and performance of global actions and application actions, via NLP, to specific contexts of software applications.

### Example Aspects of the System Related to Computer-Based Models

The system of the present disclosure, according to various implementations, includes computer-based model functionality (including, accordingly various implementations, language model functionality), a protocol for determining available actions, and a protocol for identifying actionable user interface elements. Applying these, and among other, aspects of the system can advantageously enable recommendation and execution of actions, among other functionalities.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A Language Model is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. An LLM may comprise a NN trained using self-supervised learning. An LLM may be of any type, including a Question Answer ("QA") LLM that may be optimized for generating answers from a context, a multimodal LLM/model, and/or the like. An LLM (and/or other models of the present disclosure), may include, for example, attention-based and/or transformer architecture or functionality. LLMs can be useful for natural language processing, including receiving natural language prompts and providing natural language responses based on the text on which the model is trained. LLMs may not be data security- or data permissions-aware, however, because they generally do not retain permissions information associated with the text upon which they are trained. Thus, responses provided by LLMs are typically not limited to any particular permissions-based portion of the model.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

A Prompt (or "Natural Language Prompt" or "Model Input") can be, for example, a term, phrase, question, and/or statement written in a human language (e.g., English, Chinese, Spanish, and/or the like), numbers/symbols that can take one or more specific formats, and/or other text string, that may serve as a starting point for a language model and/or other language processing. A prompt may include a user input or query, or may be generated based on a user input or query, such as by a prompt generation module (e.g., of a model-based assistant system) that supplements a user query with additional context, an instruction, lists of available actions, examples, and/or other information that may improve the effectiveness (e.g., accuracy and/or relevance) of an output from the language model. A prompt may be provided to an LLM which the LLM can use to generate a response (or "model output").

A context can include, for example, any information associated with user inputs, prompts, responses, sample action formats, and/or the like, that are generated and/or communicated to/from the user, the model-based assistant system, the LLM, and/or any other device or system. For example, context may include a conversation history of all of the user inputs, prompts, and responses of a user session or multiple user sessions. Context may be provided to an LLM to help an LLM understand the meaning of and/or to process a prompt, such as a specific piece of text within a prompt. Context can include information associated with a user, user session, software application, or some other characteristic, which may be stored and/or managed by a context generation module. Context may include all or part of a conversation history from one or more sessions with the user (e.g., a sequence of user queries, prompts, and/or outputs/responses), and/or user selections (e.g., via a point and click interface or other graphical user interface). Context may include sample actions, including applicable action parameters, in a specific format for an LLM to replicate when generating output which includes relevant actions. Thus, context may include one or more of: portions of code containing computer functions (herein also referred to as "actions"), a user query (e.g., user input in the form of a statement, question, or combination thereof), sample actions, context associated with a software application, and/or a previous output from a LLM responding a user query, among other pieces of information. Additional examples of context are described herein. While in general the present disclosure, for clarity purposes, describes LLM prompts as including one or more of user queries, context, available actions, and/or instructions, as any or all of these items may, in various implementations, be considered to be overlapping and/or fall within the meaning of context.

An instruction can include, for example, any directive or command that specifies a particular operation to be taken or a task to be performed associated with user queries, prompts, actions, responses, context, and/or the like. Instructions can be generated and/or communicated to/from the user, the model-based assistant system, the LLM, and/or any other device or system. For example, an instruction can be included in a prompt and can direct an LLM receiving the prompt to generate an output which accounts for contents of the prompt in a particular manner or with a particular methodology. Additional examples of instructions are described herein.

As context and/or instructions within a prompt are more specific and tailored to a desired output, an LLM can generate output with more specificity. Context/instructions within a prompt can be generated so as to direct an LLM to review the content of the prompt with a particular methodology. When a prompt includes a list of options, and additionally includes sufficient context and instruction, an LLM which receives the prompt can generate output which recommends one or more of the options based upon relevance to the context and instruction. Therefore, if a prompt includes a list of available actions and sufficient context and instruction, an LLM which receives the prompt can generate output which includes a list of relevant actions (e.g., one or more of the available actions with corresponding action parameter values). The relevant actions can be displayed to a user as recommended actions and/or performed.

### Example Aspects of the System Related to Determining Available Actions

LLMs and their functionality can be leveraged by the herein described system and methods to facilitate identification, recommendation, selection, and performance of available actions.

In various implementations, the system can include a front end device and a back end system. The front end device can include a computing device on which an assistant application and a software application are executed and/or rendered. The assistant application can be a piece of computer-executable software which performs at least a portion of the method of the system. In various implementations, the assistant application can be embedded in, associated with, or displayed in association with or adjacent to, the software application. The software application can be a piece of software which is being complemented and/or supported by the system. In various implementations, software applications can be interactive web pages and/or provided via interactive web pages, among various other implementations. The software application can include one or more actions. The actions can be computer functions which can be implemented so as to achieve some processing result or perform some processing action within the software application and/or another software application, for example. Actions associated with the software application can be referred to herein as "application actions." Actions can also include "global actions," which can include any actions that may be associated with other software applications and/or systems. In some implementations, actions may also be associated with the assistant application. Although the assistant application and software applications can be independent pieces of software, the assistant application can be configured to receive information from the software applications, and can further be configured to communicate with a back end system, enabling performance of multiple aspects of the system.

Communication of information between the assistant application and software applications, and/or between the assistant application and a back end system (e.g., via a front end device), can be facilitated by a protocol, format, and/or API contract, and one or more communications channels. The protocol, format, and/or API contract can define how the assistant application and software applications are to communicate and/or exchange information. The protocol, format, and/or API contract can outline expectations and requirements for data exchange, ensuring the assistant application and software applications work seamlessly together. In various implementations, the protocol, format, and/or API contract can indicate use of a communications channel to transmit information from software applications to the assistant application.

A communications channel can include a mechanism for real-time communication or data sharing between the software application and the assistant application. The communications channels can allow the assistant application to receive information from the software applications without needing to repeatedly request new information from the software applications.

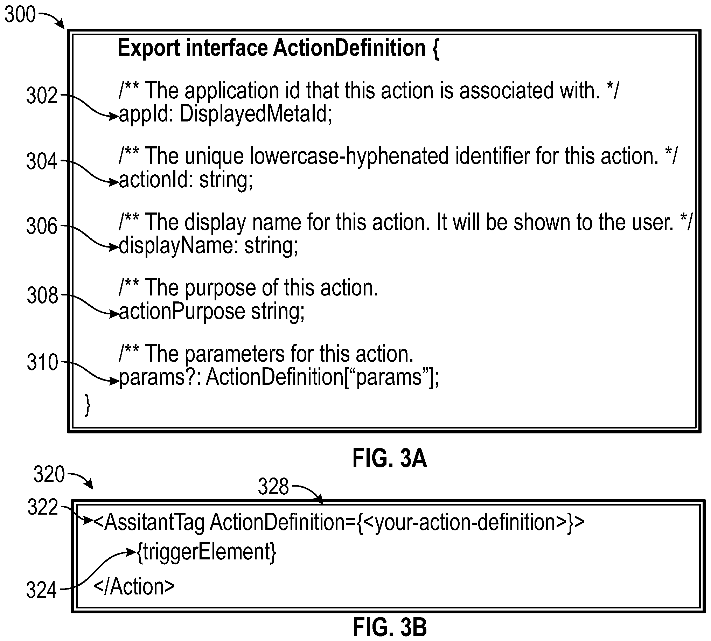

The protocol, format, and/or API contract can indicate inclusion of action definitions and application of wrapper texts (described in more detail with reference to FIGS. 3A and 3B) to actionable user interface elements included in software applications. Action definitions can include action descriptors that provide a description of and/or definition for a given action. Wrapper texts can be formatted pieces of code which can be used to identify an actionable user interface element and an associated action. Within code of software applications, wrapper texts can be positioned around, or can include a reference to, actionable user interface elements. Additionally, wrapper texts can include an indication of an actionable user interface element and an associated action definition or a reference to an action definition. The indication of an actionable user interface element can include an assistant tag, a piece of code which indicates that the wrapper text contains or references a user interface element. Therefore, when the API contract is applied, the software application can be configured to determine a list of available application actions by identifying wrapper texts and deciphering the contents thereof (e.g., action definitions), after which the list of available application actions (including the action definitions) can be transmitted to the assistant application. Identification of wrapper texts can occur when actionable user interface elements which are included within or referenced by wrapper texts are mounted by the software application. Mounting an actionable user interface element can include a process of rendering the actionable user interface element in the graphical user interface, making the user interface element visible (as a visual element) and interactive for the user. When the user interface elements are mounted, the software application can identify which wrapper texts surround mounted user interface elements. The identified wrapper texts can have included or referenced action definitions identified and transmitted to the assistant application. The software application can transmit the list of available application actions to the assistant application through the communications channel, where the list of available actions can be sent to a resource capable of being queried.

A list of global actions can be obtained by querying a resource (which can include a data repository) accessible by the assistant application and/or the software application. The resource can be a centralized location where a list of available global actions can be stored, managed, and maintained. The resource can facilitate global action collection, organization, and retrieval. The assistant application can be designed in a manner which includes global actions in the resource. The list of available global actions can be obtained by querying the resource.

Global actions and/or application actions can be enabled or disabled based upon permissions communicated from software applications. The protocol, format, and/or API contract can indicate that software applications transmit one or more permissions to the assistant application, wherein permissions can include rules and settings that can determine what actions can be performed within or by the assistant application. For example, a set of permissions from a software application may restrict performance of global actions which apply links. In the example, the assistant application can receive the permissions and when generating a list of available global actions (and/or application actions), can exclude global actions which apply a link.

In various implementations, generating a list of available global actions and available application actions can be performed when the system determines a change to the software application. A change to the software application can include execution of an action, a refreshing of a software application (generally applicable when the software application is a web page), an update or change to the software application user interface, receiving a user input or query, identification of integration between the system and a software application, any change which includes mounting one or more actionable user interface elements, among other changes. Upon detection of a change to the software application, the system can re-determine the available application actions and/or global actions and generate an updated list of available application actions and/or available global actions.

The lists of available actions (including updated lists of available actions) can be transmitted from the front end device to the back end system, where the back end system can engage with the LLM to cause generation of replies to user queries and/or lists of recommended actions, as described herein. Lists of available actions can be transmitted from the front end device to the back end system via one or more communications channels. Additionally, as described in greater detail herein, user queries can be transmitted from the front end device to the back end system via one or more communication channels. In various implementations, the lists of available actions can be transmitted via a first communication channel, and the user queries can be communicated to the back end system via a second communication channel.

### Example Contents of Available Actions

Actions (including application actions and/or global actions) can be associated with respective action definitions. Action can include one action descriptors (e.g., elements that provide information about the characteristics, properties, or features of a particular action). Action descriptors can be included in action definitions (as shown in FIG. 3A). FIG. 3A illustrates an example action definition 300, according to various implementations of the present disclosure. Example action definition 300 can include one or more of: an application identifier 302, an action identifier 304, a display name 306, an action purpose 308, or one or more action parameters 310 (or one or more sets of action parameters).

Application identifier 302 can be a name of a software application with which the action is associated (e.g., within which an action is located). For example, an application identifier 302 can be "analyze-app", where "analyze-app" is a name of a software application. Application identifiers can be useful in both application actions and in global actions (where identification of a related software application can be important for performing an action).

Action identifier 304 can be a unique identifier used to identify and/or perform the associated action. In various implementations, application identifier 304 can be executed as a piece of computer code if supplied appropriate action parameter values. The action identifier 302 can facilitate identification of the action definition after a recommended action is selected. An action identifier 302 can be, for example, "analyze-dataset", or it could be random unique identifier made up of some other string of characters and/or data.

Display name 306 can be a name describing the action which a user can be shown on an interactive user interface (described in more detail herein) panel in the graphical user interface and/or which can be provided to an LLM as a portion of a prompt. For example, a display name 306 can be "Analyze Dataset".

Action purpose 308 can be a text description of the action, including effects and uses of the action, which can be shown to a user on the graphical user interface and/or included within a prompt. For example, an action purpose 308 can be "Analyze a chosen dataset with filters, joins, and visualizations."

Action parameters 310 can include action parameters usable and necessary to perform associated actions. Action parameters 310 can describe a quantity, type, purpose, and/or format of input an action requires to be performed. Action parameters can describe which action parameter values are needed to perform an action. Action parameters 310 can additionally describe whether an input is necessary for an action to be performed. Each of the action parameters 310 can include, for example, one or more of a data source identifier, a database identifier, a data type, a necessity label (corresponding to whether or not the input is necessary to perform the action), and/or the like. In general, various actions may be performable by execution of a function, which function may take one or more inputs parameters. The action parameters may define what those function parameters include, such as a number of parameters, data types of those parameters, and/or other formatting and/or function definition information needed to execute the function associated with the action.

The data source identifier can include a unique identifier which can specify a particular source of data within a system or application. The data source identifier can help to differentiate between various data sources, such as databases, application programming interfaces, or files, and can enable systems to access and interact with the correct data. A data source can be a location, system, or medium where data is stored and from which data can be queried, analyzed, or processed.

The database identifier can include a unique name or code used to reference a specific database, which can include an organized collection of data that is stored and managed in a structured manner. Databases can be queried to identify and/or retrieve data. Database identifiers can distinguish between different databases, tables, columns, and other objects, ensuring that queries and operations are directed to the correct repository of data.

The data type can include a classification that specifies the format of data which a variable can hold in programming and database management. Data types can determine how data is stored, processed, and manipulated. Data types can include an integer, a floating point number, a text string, a boolean value, an array, a list, among others.

The necessity label can include a boolean value indicating whether an input is necessary to perform the action. For example, in various implementations, the necessity label can be True or False.

For example, a set of action parameters 310 can be {datasetId: {type: string, description: "Identifier of the dataset", required: True}, databaseID: {type: string, description: "Optional identifier of a database where the dataset can be saved, required: False} }.

Action parameter values which confirm with the action parameters 310 of an action can be used as input to, e.g., a function associated with the action, to perform the action.

Some action definitions may not include one or more of the action descriptors. For example, an action that does not include a defined function to perform the action may not include action parameters. For example, an action which opens a link to a software application may not require any action parameter values, the link may be included within the action itself. Thus, in various implementations, an action definition for a given action may include one or more, or possibly all, of the items described in reference to FIG. 3A.

An action definition can be provided and/or generated for each action included in a software application. Similarly, action definitions can be provided to and/or generated for each global action available in a given application context. When a list of available actions is generated, the list can include one or more action descriptors within the action definition.

### Example Method of Identifying Available Application Actions

Identifying available application actions can include determining which wrapper texts include or reference mounted actionable user interface elements.

Actionable user interface elements can include pieces of code which correspond to visual elements on the GUI and which, when selected, cause an associated action to be performed. An actionable user interface element can be associated with an action and, when executed, can cause performance of the associated action. For example, when an actionable user interface element on a GUI is selected by a user (by, for example, clicking on the mounted user interface element), a web page can be loaded. Actionable user interface elements can include, for example, user interface buttons, among other example user interface elements. A wrapper text can facilitate a method of identifying an actionable user interface element and an associated action definition. Within a wrapper text, the action definition can describe the action associated with the user interface element included in or referenced by the trigger element.

FIG. 3B illustrates an example wrapper text 320, according to various implementations of the present disclosure. Referring to FIG. 3B, the wrapper text 320 can be a formatted piece of code which can be used to identify an actionable user interface element and an associated action. The wrapper text 320 can include an assistant tag 322, an action definition 328 (and/or a reference to an action definition 300), and a trigger element 324. The assistant tag 322 can include a piece of code which marks the wrapper text 320 as a data object which contains or references an actionable user interface element and/or an action definition 328. The assistant tag 322 can be identified by the software application as corresponding to the wrapper text 320. The action definition 328 included or referenced in the wrapper text can include the previously described action descriptors. The trigger element 324 can be a piece of code which includes or references an actionable user interface element. The action definition 328 included in a wrapper text can be associated with the actionable user interface element referenced by the trigger element 324. Thus, the wrapper text 320 can be used to determine which actions are associated with which actionable user interface elements.

When actionable user interface elements are identified by the system, via identification of assistant tags within wrapper texts that include or reference mounted actionable user interface elements, corresponding action definitions can be similarly identified and transmitted to the assistant application in a list of available application actions. Upon selection of a recommended action, action definitions can be used to identify associated actionable user interface elements. The actions descriptors can be used to identify an action definition included in a particular text wrapper (e.g., by identifying which text wrapper includes or references the action descriptors) facilitating access to the actionable user interface element.

### Example Aspects of the System Related to Determining Context Associated with a User Query

Operation of the system, including determining and providing action recommendations to a user, can advantageously be improved further by including contextual information related to the assistant application and software applications, and/or the like. The system may use such contextual information to, for example, determine recommended actions, determine action parameter values for recommended actions (e.g., to execute functions associated with the actions), and/or the like. For example, if an action involves performing analysis of a dataset, the dataset's name (e.g., dataset identifier) can be determined so as to enable performance of the analysis of the dataset in response to selection of the action. Thus, the system can advantageously include identification of contextual information associated with software applications and the assistant application.

The disclosed system can obtain contextual information associated with software applications and apply the contextual information as context within generated prompts. **In** various implementations, contextual information associated with software applications can be identified through application of logic which looks to contents of one or more data structures which are configured to contain relevant contextual information. For example, software applications can be configured to transmit a dataset name or a dataset identifier, via the communications channel, to the assistant application, where the assistant application can further process the dataset name or dataset identifier as, or a portion of, context within a prompt.

Alternatively, for example, although each website has a different uniform resource locator ("URL"), each URL can be located in a known data structure, meaning a broad set of websites can be interacted with in a systematic, routine manner to reliably locate each website's URL, allowing URLs to be reliably identified as contextual information. Similarly, URLs commonly contain text which defines a type of data or a dataset identifier of a dataset being displayed or used by the software application. For example, a URL can be "https://www.website.com/Iris_Dataset.csv". In this example, the text "Iris_Dataset.csv" is a name of a commonly applied dataset for machine learning purposes. The system can be configured to analyze URL text to identify dataset names. Identification can be based upon inclusion of common data formats, including .csv, .xml, .parquet, among others. Thus, if a URL contains text corresponding to a common data format, a dataset identifier can be identified.

In various implementations, the system can identify a dataset identifier from the software application 106 and can add the dataset identifier to a prompt as context. For example, a user query can be "How do I analyze this data?" while the dataset identifier is "Iris_Dataset.csv". In this example, the system can identify the dataset identifier and include the dataset identifier as context in a prompt. In this example, a corresponding prompt can be:
You will be receiving a query from a user. Generate an appropriate response while keeping in mind that the user is reviewing a dataset with a name of "Iris_Dataset.csv", although the query may not concern the dataset. The query is:
"How do I analyze this data?"

### Example Aspects of the System Related to Prompts Requesting Computer-Parseable Responses

The disclosed system can advantageously leverage the previously mentioned aspects of prompt generation and LLM functionality, but can additionally include directing LLMs to generate output in a specified format capable of being executed by a computer. In various implementations, a prompt can request an LLM to generate a response in a specified format. In various implementations, the specified format can be JavaScript Object Notation ("JSON"), a lightweight data interchange format that is simple for both humans to read and machines to parse and generate. JSON is commonly used to transmit data between a server and a secondary piece of software, or between different parts of a software system. For example, a prompt transmitted to an LLM can be:
You will be provided a message or question from a user. Review and generate a response in JSON format.
The following is the user's message or question:
   "Create a list of three names with corresponding incrementing numbers starting from 1."

After receiving the prompt, the LLM can generate the following output:

```
                { "John": 1, "Elizabeth": 2, "Rashid": 3 }
```

Upon receiving the output, the JSON object can be applied to one or more action as input, or processed/used in another manner.

The system can parse received output from an LLM. Parsing, generally, can include verifying that a received output (or an object included in the output) conforms to a specified structure and/or format, verifying that the data items conform to specified data types, and/or the like. As applied to the previous example, parsing can include verifying the received list is in an appropriate JSON format.

In various implementations, parsing can include application of logic internal to the system which attempts to identify patterns in pieces of data consistent with specific formats.

In various implementations, parsing can include generating a prompt which includes a received output and an instruction for the LLM to generate an output that states, with a yes or no, whether the received output includes a data object in the specific format.

### Example Aspects of the System Related to User Queries, Prompts, and Responses

By applying the list of available global actions, the list of available application actions, context associated with a software application, and user queries, the system can cause generation of lists of recommended actions by utilizing one or more LLMs.

A user query can include user input in the form of a statement, question, or combination thereof. User queries can be included in prompts as context (or a portion of context) and used to direct generation of output from an LLM.

User queries can be received in a number of ways. The front end device can include an interactive graphical user interface panel (e.g., an interactive graphical user interface of the assistant application) configured to receive user queries. The interactive graphical user interface can be, for example, a chat user interface. In various implementations, the chat user interface can be included within the interactive user interface panel, which can include a defined area or section within the GUI that serves a purpose of organizing and displaying content and/or controls related to and/or in service of the assistant application. Text can be entered into the chat user interface to communicate a user query to the assistant application.

User queries can be included in prompts as context or a portion of context to direct generation of text responses and/or lists of relevant actions.

### Example Aspects of the System Related to Prompts Requesting Relevant Actions

The disclosed system can include generation of prompts which include a variety of contents. Prompts can be generated, provided, and received, by the back end system. After receiving an output, an LLM can generate an output which can (among other operations) be used to generate a response transmitted from the back end system to the front end device for display and/or performance.

A prompt can include a user query, lists of available actions, context, and/or an instruction. Depending on the implementation, the context may be consisted as including the user query, the lists of available actions, and/or the like. The instruction can include a command for an LLM to generate an appropriate text reply to the user query and any additional information included in the prompt as context. An output corresponding to the prompt can include text, including a list of recommended and/or relevant actions.

An example general format of an LLM prompt for generating action recommendations is shown below:
[INSTRUCTIONS]
[LIST OF AVAILABLE ACTIONS]
[DESCRIPTORS OF THE ACTIONS]
[CONTEXT]
[EXAMPLE FORMAT OF RELEVANT ACTION]
[USER QUERY]

In additional detail, an example prompt provided to an LLM could include: You will be provided a message or question from a user. You will also be provided a list actions, descriptions of what each action does, and action parameter values required to execute the actions. Review and rank the actions according to which most appropriately addresses the user's message or question. Respond with a JSON object containing the list of actions to suggest to the user, a numerical ranking of each actions, and corresponding parameters for each action. The available actions are:
Addition()
Subtraction()
Multiplication()
Division()

Descriptions of the actions are:
Addition() requires two numbers (float point or integer) and will return a number equal to the sum of the two numbers.

Subtraction() requires two numbers (float point or integer) and will return a number equal to the difference between the first and second number. Multiplication() requires two numbers (float point or integer) and will return a number equal to the result of multiplying the first and second number. Division() requires two numbers (float point or integer) and will return a number equal to the result of dividing the first number by the second number.

The parameters for the actions are:
Addition(): {first_number: {type: integer, description: first number being added, required: True,}, {second_number: {type: integer, description: second number being added, required: True, } }
Subtraction(): {first_number: {type: integer, description: number from which the second number is subtracted, required: True,}, {second_number: {type: integer, description: number subtracted from the first number, required: True, } }
Multiplication(): {first_number: {type: integer, description: first number being multiplied, required: True,}, {second_number: {type: integer, description: second number being multiplied, required: True,}} Division(): {first_number: {type: integer, description: number which is divided by the second number, required: True,}, {second_number: {type: integer, description: number which the first number is dived by, required: True,}}
[ADDITIONAL CONTEXT FROM PREVIOUS INTERACTIONS WITH THE USER]

The generated JSON object should conform to the example JSON object shown below:
{"list of relevant actions": [{ "action": First_Action(), "parameters": [parameter_1, parameter_2] }, { "action": Second _Action(), "parameters": [parameter_1, parameter _2, parameter _3]}]}

The following is the user's message or question:
"I am purchasing a dozen eggs and a box of cereal. The eggs cost $3.25 and the cereal costs $4.00. How do I calculate my total bill?"

After receiving the prompt, the LLM can generate an output of:
{"list of relevant actions": [{ "action": Addition(), "relevance": 0.95, "parameters": [3.25, 4] }, { "action": Subtraction(), "relevance": 0.15, "parameters": [3.25, 4], {"action": Multiplication(), "relevance": 0.3, "parameters": [3.25, 4]}, { "action": Division(), "relevance": 0.1, "parameters": [3.25, 4]}]}

Upon receiving the output, the actions can be parsed, displayed to a user, and/or performed. In this example, upon receiving the output, the action "Addition()" can be identified as having the highest relevance (0.95). The system can accordingly identify and include the action and the action parameters values associated with the action in a response, where the response can be communicated to the user who provided the prompt.

In various implementations, a plurality of actions (and corresponding action parameter values) included in the JSON object can be selected and included in a response.

In various implementations, the plurality of actions selected (e.g., from among the recommended actions provided by the LLM output) can be selected by applying a threshold filter to the actions included in the JSON object. The threshold filer can be a numeric value. After a JSON object is received, actions with corresponding relevance values that meet or exceed the threshold filter numeric value can be selected and included in a response along with associated action parameter values. For example, a JSON object can contain actions with relevance values of 0.1, 0.3, 0.15, and 0.95 (similar to the JSON object in the previous example). In this example, a threshold filter can be 0.9. The system can review the relevance values and can select the action corresponding to the relevance value of 0.95 (which in the previous example was Addition()).

In various implementations, the threshold filter can be between 0.51 and 0.98, and/or any other number.

In various implementations, if no relevance value meets or exceeds the threshold filter, if no actions are included in an output, of if the output generated by the LLM is not in the requested format (e.g., JSON) or the parameter values do not meet the parameter definitions (e.g., a parameter value is a string, but should be an integer) (e.g., which can be determined based on parsing the output of from the LLM), the system might not recommend an action. In such implementations, the system can re-prompt the LLM or can generate a response which includes text explaining that no relevant and/or sufficient action was identified, or that one or more errors are to be corrected.

Re-prompting can include providing a first prompt to the LLM an additional time or generating a second prompt which includes the first prompt and instructions to re-examine the first prompt and generate a JSON object including a list of actions ranked according to relevance to the subject of the first prompt.

In various implementations, actions can be performed by applying the LLM-determined action parameter values (e.g., the action parameter values parsed from, and verified from, the LLM output) to the actions. Performance of actions can be automatically performed, performed in response to satisfaction of various criteria (e.g., a sufficiently high relevance/recommendation), performed in response to a user selection, and/or the like.

In various implementations, two prompts can be generated and processed in relation to a single user query. In such implementations, a first prompt can include context (including the user query) and an instruction for an LLM to generate a text output which accounts for the user query and supplied context. A first output can be received and provided to the user as a first response and displayed in the GUI. The first response can include a text reply to a question asked in the user query. Additionally, a second prompt can include context (including the user query), a list of available actions (including a list of available global actions and a list of available application actions), and an instruction for an LLM to generate a list of relevant actions which account for the context and list of available actions. A second output can be received and the relevant actions used to generate a list a recommend actions which can be displayed to the user on an interactive user interface panel. In various implementations, advantageously the first prompt and the second prompt may be provided as separate prompts to an LLM so as to speed up delivery of results to the GUI. For example, by performing first and second prompts, the results of the first prompt (which may include, for example, an answer to the user's query) can be provided to the GUI immediately. Then, the second prompt can be provided to the LLM while, or after, the first result is displayed, and when the results of the second prompt are received, those results can then be displayed in the GUI. Accordingly, results delivery to the GUI is sped up. Similarly, in various implementations a single LLM, or separate LLMs may be used for the various prompts. Using different LLMs may advantageously enable more efficient use of resources. For example, LLMs of different strengths or capabilities, which may be specialized to the particular types of prompts, may be used for the various prompts. Alternatively, the same LLM may be used for the various prompts, or in some implementations a combined single prompt, or iterations of prompts, may be provided to one or more LLMs.

Output from the LLM can additionally be included as context within an additional prompt so as to provide further context for facilitating ranking of available actions. In various implementations, the system can generate a second prompt which includes the list of available actions, context which includes the first response, and an instruction which directs an LLM to generate output that includes a list of relevant actions which accounts for the user query and/or the first response. The list of available actions can include one or more action descriptors, as mentioned above. For example, the list of available actions can include a list of action display names, action purposes, and/or action parameters, among other action descriptors. The instruction can request a list of relevant actions and action parameter values which correspond to the user query and first response. The list of relevant actions can include action identifiers, action parameter values, and display names, among other action descriptors.

The system can parse output from the LLM. In various implementations, parsing can include an internally contained process by which the system identifies if information included in the output is in a specified format. In various implementations, parsing can include generating a second prompt containing the output and an instruction directing the LLM to confirm that the output (or a portion of the output) conforms to the specified format.

As mentioned above, if parsing reveals that output does not conform to the specified format, the system can re-prompt the LLM by providing to the LLM the related prompt an additional time. If an output received in response to re-prompting does not conform to the specified format, the system can re-prompt one or more additional times. In various implementations, if the LLM has been re-prompted five times, the system can generate and transmit a response to the user including text describing that there are no recommended actions.

In various implementations, re-prompting can include generating a prompt which includes a first output, context and instruction of a first prompt, and an additional instruction for the LLM stating that the first prompt was provided output in an incorrect format and to generate a corrected output. A corrected output can be an output which is, or includes, content in the correct, specified format. In various implementations, the specified format can be JSON format.

After confirming that an output (an output which includes a list of relevant actions) conforms to the specified format, contents of the output, including the list of relevant actions and associated action parameter values (if applicable), can be used to generate a list of recommended actions to be included in a response. In various implementations, generating the list of recommended actions can include placing each set of action parameter values into an associated action identifier and generating a data object which includes the combined action identifiers and action parameter values. In various implementations, generating the list of recommended actions can include placing each relevant action and set of action parameter values into a data object which can be interpreted by the system. Responses can be transmitted from the back end system to the front end device for display and/or performance.

### Example Aspects of the System Related to Selection of Recommended Actions

Upon receipt of an output which includes text from the LLM, the text can be included in a response transmitted by the back end system to the front end device and displayed on the interactive user interface panel for a user to observe.

Upon parsing an output from the LLM which includes a list of relevant actions and action parameter values (if applicable), a list of recommended actions can be generated and can be included in a response. The list of recommended actions can be displayed on the interactive user interface panel (e.g., in the assistant application interactive graphical user interface) for a user to observe and/or interact with.

Recommended actions can be displayed on the interactive user interface panel as visual elements, each visual element corresponding to a recommended action. A user can provide an input selecting one or more of the visual elements to cause the corresponding recommended action to be performed.

Performing the recommended actions can include, for example, opening a link included in the action, executing the action, or causing an actionable user interface element which corresponds to the recommended action to be emphasized, among various other types of actions.

A link can be a code which corresponds to a location of a website, a file, another piece of data or data structure, another software application, and/or the like. If an action's sole operation is applying a link, the action can be called without action parameter values. The system can determine that an action does not require action parameter values by identifying that an action definition corresponding to the action does not include action parameters or includes action parameters which are marked as not necessary. Opening the link can cause a webpage to change, an application to change, a piece of data to be loaded, or another operation to be performed, for example.

Executing an action can include performing the action with the action parameter values included in the recommended action provided by the LLM (e.g., as applied to a function associated with the action). For example, executing an action can perform an analysis of a dataset, where analysis can include determining a standard deviation, a variance, or another calculation.

Emphasizing an actionable user interface element can include identifying an actionable user interface element corresponding to a selected recommended action and causing the actionable user interface element to be visually modified. Visually modifying an actionable user interface element can include modifying a color of the visual element, boldening the visual element, darkening/lightening the visual element, changing a shape of the visual element(s), and/or some other modification or combination thereof.

Modifying a color of the visual element can include replacing a first color with a second color; replacing the first color by cycling between at least a second color and third color, where the third color can include the first color; replacing the first color with a multi-colored pattern; or any other modification of color or combination thereof. For example, a first color can be white and a second color can be yellow. In this example, during emphasis, the visual element can be changed from white to yellow. In another example, a first color can be white, a second color can be green, and a third color can be red. In this example, during emphasis, the visual element can be changed from white to green, from green to red, and cyclically changed between red and green for the duration of the emphasis.

Bolding the visual element can include increasing and/or decreasing a thickness of lines within and/or immediately surrounding the visual element. For example, all lines within and immediately surrounding the visual element can be of a thickness measured as 1 point font. Boldening the visual element can include increasing the thickness to 2 point font. In another example, a thickness of lines can be measured as 1 point font. In this example, boldening the visual element can include decreasing the thickness to 0.5 point font.

Darkening/lightening the visual element can include increasing or decreasing a visible brightness of the GUI apart from a portion of the GUI associated with the user interface element. Additionally, darkening/lightening the visual element can include increasing or decreasing a visible brightness of a portion of the GUI associated with the user interface element.

Changing a shape of a visual element can include replacing a first shape with a second shape; replacing the first shape by cycling between at least a second shape and third shape, where the third shape can include the first shape; or any other modification of shape or combination thereof. For example, a first shape can be a rectangle and a second shape can be a triangle. In this example, during emphasis, the visual element can be changed from a rectangle to a triangle.

To enable emphasis of actionable user interface elements, an actionable user interface element which is associated with a selected recommended action can be identified. Identifying the associated actionable user interface element can include identifying which wrapper text includes or references an action definition which includes the action identifier associated with the selected recommended action. When a recommended action is selected, an action identifier corresponding to the selected recommended action can be identified. The system can identify an action definition which includes the action identifier. The system can identify a wrapper text which includes the action definition, and the trigger element included in the identified wrapper text. The trigger element can be used to emphasize the actionable user interface element.

### Example Features and Functionality of the System

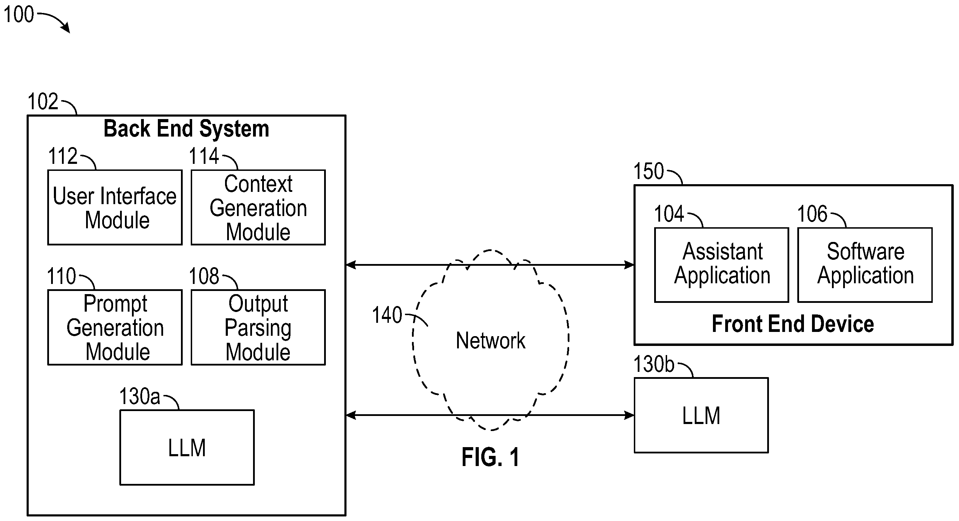

FIG. 1 is a block diagram illustrating an example model-based assistant system in an example computing environment 100, according to various implementations of the present disclosure The system can include a front end device 150, a back end system 102, one or more networks 140, and one or more LLMs 130a, 130b.

The frond end device 150 can include an assistant application 104 and a software application 106. The front end device 150 can be a client device, which can be a personal computer, a cellular phone, a smart watch, a tablet, or any other device capable of performing the methods of the system. The assistant application 104 can include, for example, one or more interactive graphical user interfaces (e.g., chat user interfaces), a set of global actions and/or access to resources indicating such global actions, computer-executable functions which can perform a variety of tasks, and/or a set of logic for performing the methods of the system, among various other functionality. The software application 106 can be any other piece of software, optionally designed in compliance with the protocol, format, and/or API contract and capable of being performed on the front end device 150. The software application 106 can have wrapper texts and action definitions assigned to actionable user interface elements allowing actionable user interface elements and action definitions to be identified and their contents utilized. The front end device 150 can generate an interactive graphical user interface ("GUI") in the front end device 150 which can display user interface elements and receive user input. The GUI can include an interactive user interface panel corresponding to the assistant application 104, a portion of the GUI which can include visual elements which facilitate user interaction with the system. The interactive user interface panel can include, for example, a text box to receive user queries and/or interactive user interface element for a user to select displayed options. Additionally, the user interface element can correspond to operations of the software application. The assistant application 104 and/or the software application 106 can additionally communicate with the back end system 102 over the network 140. The assistant application 104 can identify available global actions, and receive available application actions included in the software application 106. The available application actions can be received via a communications channel. The assistant application can identify context associated with software applications (including but not limited to, dataset names).

The assistant application 104 can transmit lists of available global actions, lists of available application actions, context associated with software applications, and/or user queries to the back end system 102 via the network 140. The assistant application 104 can also receive (via the network 140) responses which include lists of recommended actions from the back end system 102 and cause the recommended actions to be displayed in the interactive user interface panel as or within visible elements. The visible elements can be or include the display names associated with the recommended actions. The assistant application 104 can additionally receive user input on the interactive user interface panel selecting a recommended action and can perform the action.

The back end system 102 can be performed on a computer server or any other computer device capable of performing the method of the system. The back end system 102 can include portions of computer code configured to perform certain tasks, e.g., modules. The modules within the back end system 102 can include a user interface module 112, a context generation module 114, a prompt generation module 110, an output parsing module 108 and the LLM 130a. In various implementations, the LLM 130b can be located external to the back end system 102 and the front end device 150 and can be communicated with via the network 140.

The user interface module 112 can communicate with the front end device 150 to facilitate generation of user interface elements in the GUI. The visible location of user interface elements can be determined by the user interface module 112 and communicated to the front end device 150 to be displayed in the interactive user interface panel.

The prompt generation module 110 can receive the lists of available actions, and context (from the context generation module 114), and can generate prompts which direct the LLM (130a or 130b) to generate corresponding output. The prompt generation module 110 can generate prompts which includes context (including but not limited to the user query) and instruction, among other features, as described hereon. Additionally, the prompt generation module 110 can generate prompts which include context (including but not limited to the user query), instruction, and a list of available actions.

Context and instructions included in prompts can be generated by the context generation module 114and/or the prompt generation module 110. The prompt generation module 110 can communicate with the context generation module 114 to facilitate proper prompt generation.

Context can be derived from action descriptors, prior interactions with the user, and/or the like, thus allowing context to contain descriptions of actions, action parameters of actions, and/or other information. Context can additionally include identified contextual information associated with a software application, where the contextual information can include a dataset identifier, among other pieces of information. Context can include a user query. In various implementations, instructions can be generated according to logic which bases instruction on items received by the context generation module 114. For example, when the context generation module 114 receives only a user query, the context generation module 114 can generate an instruction directing the LLM (130a or 130b) to generate an output including a text reply. In another example, when the context generation module 114 receives a user query and a list of available actions, the context generation module 114 can generate an instruction to direct the LLM (130a or 130b) to generate an output which includes a list of relevant actions.

In various implementations, the context generation module 114 can include an output in the form of a prompt. The context generation module 114 can receive a user query and can generate a first prompt including the user query and an instruction to cause the LLM (130a or130b) to generate a text reply. A first output can be received and included in a second prompt. The second prompt can additionally include the user query, a list of available actions, and instructions for the LLM (130a or 130b) to generate a list of relevant actions which considers the user query and first output.

In various implementations, a first prompt can include context (including a user query), a list of available actions, and an instruction directing generation of a list of relevant actions, and/or other information as described herein. In such implementations, upon receipt of a first output which includes a list of relevant actions, a second prompt can be generated which includes the first prompt and an additional instruction directing the LMM to generate a text reply which accounts for the first prompt and the new instruction.

Instructions within prompts can direct the LLM (130a or 130b) to generate output which conforms to a specified format. In various implementations, the specified format can be JSON.

The output parsing module 108 can receive an output from the LLM (130a or 103b) and can parse the output. Parsing the output can include identifying if the output, or contents included within the output, conform to a specified format. If parsing determines that the output conforms to the specified format, for example, a JSON list of relevant actions, the output can be reformatted/extracted/used to generate a response including the list of recommend actions. The list of recommended actions can be transmitted to the front end device 150 and displayed to the user. If parsing determines that the output does not conform to the specified format, the output parsing module 108 can cause the prompt to be re-sent to the LLM (130a or 130b). In various implementations, if a re-sent prompt causes an output which does not conform to the specified format, the prompt can be re-sent one or more additional times. In various implementations, re-prompting can be performed five (or some other number) times and if an output is not received which conforms to the specified format, a response can be generated which includes text which describes that no recommended action could be located.

In various implementations, re-prompting can include generating a second prompt which includes a first prompt and an additional instruction directing the LLM (130a or 130b) to determine an output which accommodates the first prompt and the specified format.

In various implementations, the LLM 103b can be located external of the back end system 102. If the LLM 103b is located externally to the back end system 102, the back end system 102 can include an API for interacting with and utilizing the LLM 103b.

In various implementations, the back end system 102 can include or interact with two separate LLMs (130a or 103b). In various implementations, the LLM 130a or 130b can include two separate LLMs, two LLMs (130a) included in the back end system 102, two LLMs (130b) external to the back end system, and one LLM (130a) included in the back and system and one LLM (130b) external to the back end system 102. In various implementations, prompts containing only context (including user queries) and instructions can be transmitted to a first LLM (130a or 130b) and prompts additionally including a list of available global actions and a list of available application actions can be transmitted to a second LLM (130b or 130a).

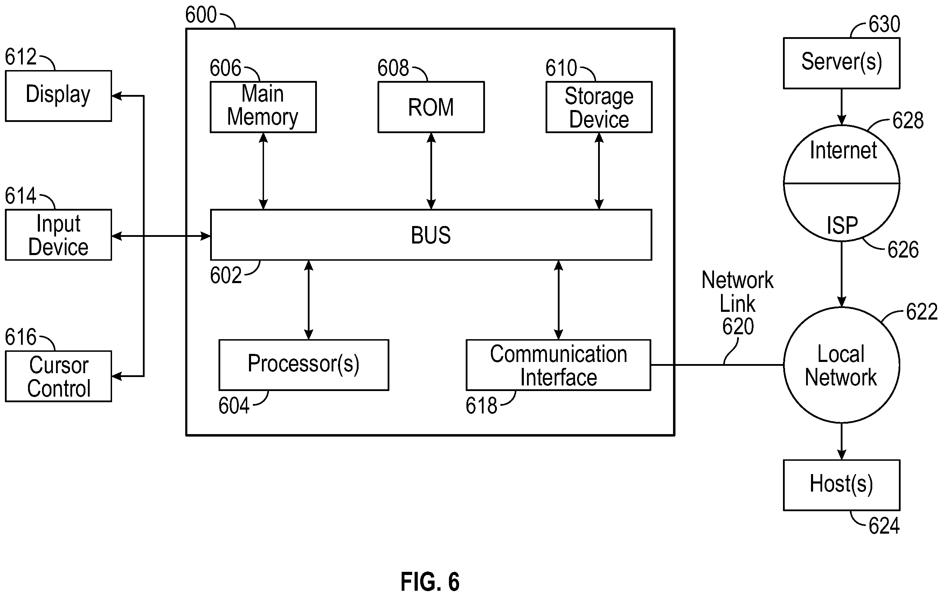

The network 140 can include any one or more communications networks, such as the Internet. The network 140 may be any combination of local area networks ("LAN") and/or a wireless area networks ("WAN") or the like. Accordingly, various components of the computing environment 100, including the back end system 102, the LLM 130b, and/or the front end device 150, for example, can communicate with one another directly or indirectly via any appropriate communications links and/or networks, such as network 140 (e.g., one or more communications links, one or more computer networks, one or more wired or wireless connections, the Internet, any combination of the foregoing, and/or the like). Similarly, the various components (e.g., as described below) of the system and the computing environment 100 may, in various implementations, communicate with one another directly or indirectly via any appropriate communications links (e.g., one or more communications links, one or more computer networks, one or more wired or wireless connections, the Internet, any combination of the foregoing, and/or the like). FIG. 6, described below, provides additional examples of aspects of implementations of such components of the computing environment 100, the system, and the like.

In various implementations, the front end device 150 and back end system 102 can communicate over two communications channels, via in the network 140. A first communications channel can carry the list of global actions and the list of application actions. A second communications channel can carry the user query.

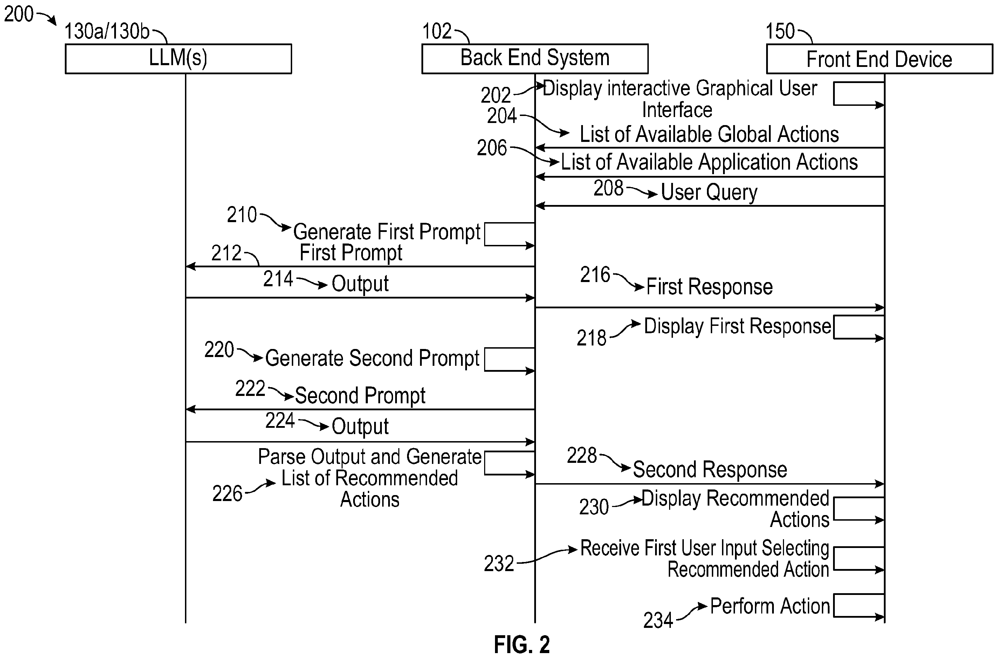

FIG. 2 is diagram 200 illustrating example communications and functionality of the model-based assistant system, according to various implementations of the present disclosure. FIG. 2 illustrates communication between the front end device 150, back end system 102, and LLM(s) (130a or 103a), facilitating generation of a list of recommended actions. First, at 202, the GUI can be displayed for a user. As described herein, the GUI can be displayed with the interactive user interface panel (e.g., of the application assistant). At 204, the front end device 150 (e.g., via the assistant application 104) can determine and provide the list of available global actions to the back end system 102. Next, at 206, the front end device 150 (e.g., via the assistant application 104) can determine and provide the list of available application actions to the back end system 102. The front end device 150 can provide the list of available application actions to the back end system 102. As described herein, the lists of available actions can be provided to the back end system via a first communications channel.

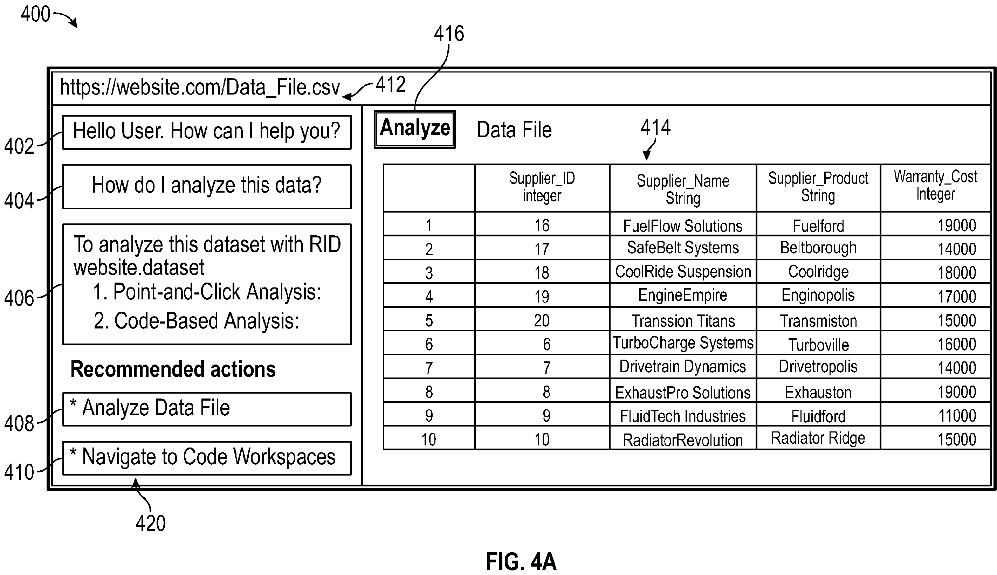

At 208 a user query can be received by the front end device 150 and provided to the back end system 102. The user query can be received from a user interacting with the interactive user interface panel (e.g., the assistant application 104). In various implementations, as is shown in FIG 4A, the interactive user interface panel can include a text box 404, a box where text from a user can be entered and received as a user query. As described herein, the user query can be provided to the back end system via a second communications channel, which can be different from the first communications channel.

At 210, a first prompt can be generated, including context (which can include the user query) and an instruction directing the LLM (130a or 130b) to generate an output including a text reply. At 212, the first prompt can be provided to a first LLM (130a or 103b), where the LLM (130a or 103b) can generate a first output. At 214, the first output can be received by the back end system 102 and used to generate a first response. At 216, the first response can be transmitted to the front end device 150, and at 218 the first response can be displayed in the interactive user interface panel for the user. An example of a first response being displayed to a user in the interactive graphical user interface of the assistant application is described below in reference to box 406 of FIG. 4A.

At 220, the second prompt can be generated, including the first response, context (including the user query), the list of available global actions, the list of available application actions, and an instruction for a second LLM (130a or 103b) to generate a list of relevant actions (with corresponding action parameter values, if applicable). At 222, the second prompt can be provided to a second LLM (130a or 103b), where the LLM (130a or 103b) can generate a second output. At 224, a second output can be received at the back end system 102 from the second LLM (130a or 103b). At 226, the second output can be parsed to determined that the second output, or content included in the second output, conforms to a specified format. If the second output does conform to the specified format, the output can be used to generate a second response including a list of recommended actions. At 228, the second response can be transmitted to the front end device 150, after which, at 230, the list of recommended actions in the second response can be displayed in the interactive user interface panel for the user. An example of a second response being displayed to a user in the interactive graphical user interface of the assistant application is described below in reference to boxes 408 and 410 of FIG. 4A.

At 232, the front end device 150 can receive a first user input selecting a recommended action. The first user input can correspond to the user interacting with the interactive user interface panel so as to select a visual element corresponding to the recommended action. At 234, the system can perform, or cause performance of, the action selected by the user. Performance of the action can include, for example, emphasis of a user interface element, and/or other execution/performance of the action as described herein.

As described herein, while not illustrated in the example of FIG. 2, the system may further re-prompt the LLM in the output 224 does not satisfy one or more criteria (e.g., the format of the response is not correct or parseable, the parameter values do not satisfy the action definitions, and/or the like). Further, in various implementations, the system may not perform two prompts as described in references to FIG. 2. For example, the two prompts described may be combined into a single prompt, or only the second prompt may be performed. Additionally, in the event of multiple prompts, the system may perform the prompts sequentially and/or in parallel. Also, as mentioned above, in various implementations, advantageously the first prompt and the second prompt may be provided as separate prompts to an LLM so as to speed up delivery of results to the GUI. For example, by performing first and second prompts, the results of the first prompt (which may include, for example, an answer to the user's query) can be provided to the GUI immediately. Then, the second prompt can be provided to the LLM while, or after, the first result is displayed, and when the results of the second prompt are received, those results can then be displayed in the GUI. Accordingly, results delivery to the GUI is sped up. Similarly, in various implementations a single LLM, or separate LLMs may be used for the various prompts. Using different LLMs may advantageously enable more efficient use of resources. For example, LLMs of different strengths or capabilities, which may be specialized to the particular types of prompts, may be used for the various prompts. Alternatively, the same LLM may be used for the various prompts, or in some implementations a combined single prompt, or iterations of prompts, may be provided to one or more LLMs.

FIG. 4A illustrates an example interactive graphical user interface ("GUI") 400 of the system, according to various implementations of the present disclosure. The GUI 400 may be generated and/or rendered on a front end device 150. The example GUI includes a software application, on a right portion of the GUI, usable for analyzing a dataset 414. The examiner GUI also includes an assistant application, on a left portion of the GUI, also referred to herein as an interactive user interface panel 420. In various implementations, the GUI 400 can comprise a desktop, mobile, and/or web application (and/or the like) in which the software application and the assistant application operate side by side and two panels. In various implementations, for example in the web application implementation, the GUI 400 can include a URL 412. Via the interactive user interface panel 420, interactions between the system and user can be facilitated and displayed, including recommended actions.

The GUI can include visual elements of one or more software applications. When the front end device 150 executes a software application, corresponding visual elements of actionable use interface elements can be displayed in the GUI, where displaying the visual elements can include mounting the actionable user interface elements within the software application code. Each software application can include one or more actionable user interface elements and different software applications can have one or more differing actionable user interface elements. Thus, when the system changes from executing a first software application to executing a second software application, one or more visual elements in the GUI can be changed. The mounted actionable user interface elements and the displayed visual elements can correspond to the available application actions in a presently executed software application. For example, in FIG. 4A, visual element 416 corresponds to an actionable user interface element. In this example, the visual element 416 is a button, and the action performs a computation which involves an analysis (hence why the visual element 416 contains the word "Analyze").

Dataset 414 can correspond to a datafile which can be analyzed by the system. The dataset can take the displayed format or any additional format (the present format is provided for illustrative purposes and is not limiting). In FIG. 4A, the dataset is related to the URL 412 included in the GUI 400 and corresponds to the dataset identifier "Data_File.csv". In this example, the dataset is a CSV file, a plain text file that uses a specific format to store tabular data, such as a spreadsheet or database table. In this example, the dataset identifier can be transmitted from the software application to the assistant application to be included as context in generated prompts.

The interactive user interface panel 420 can include a plurality of visual elements. The interactive user interface panel 420 can include inputs received from the user, and displayed messages from the system. In various implementations, the system can be configured to display a greeting message 402 in the interactive user interface panel 420 upon initialization of the assistant application.

The GUI 400 can include a text box (visual element 404) which can receive a user query and provide the user query to the system. The text box can, for example, receive text string input. In this example, the text box can receive the text "How do I analyze this data?". Because the system can identify the dataset identifier, a prompt containing the received user query can include the dataset identifier as additional context.

The GUI 400 can include a response from the back end system 102 which includes a text reply in visual element 406. The response can include a text string which in some way addresses or compliments the received user query given the additionally provided context included in one or more prompts (which can include information deriving from the software application, a chat history between the user and the system, amongst other factors), as described herein. In the GUI 400, the text reply in visual element 406 includes text describing how a user can interact with the software application to analyze the dataset.

The GUI 400 can include recommended actions (visual elements 408 and 410) which have been determined by the system and the LLM (130a or 130b) to be relevant to the user query and additional provided context and instruction. The recommended actions can include application actions (e.g., as illustrated by visual element 408) and/or global actions (e.g., as illustrated by visual element 410). By interacting with the visual elements (408 or 410) which correspond to recommended actions (e.g., but pressing/selecting the displayed buttons 408 or 410), a user can provide a user input so as to select a recommended action to be performed. A user input can include clicking a visual element, tapping on a touch screen in a portion of the touch screen corresponding to a visual element, positioning a mouse cursor over a visual element, or any other method for selecting a visual element.

Selecting a recommended global action can, for example, cause application of a link included in the global action or execution of the global action with action parameters received by the back end system 102.

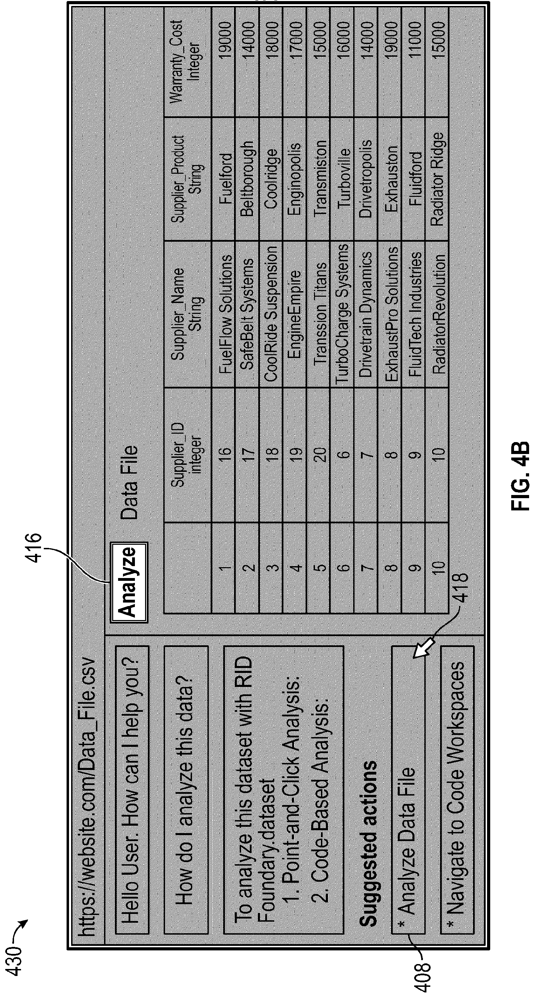

Selecting a recommended application action can, for example, cause execution of the application action or emphasis of the application action (as described herein and also in reference to FIG. 4B) thereby guiding the user to interact with the relevant visual element of the application itself, for example visual element 416.

FIG. 4B illustrates another example interactive graphical user interface ("GUI") 430 of the system, according to various implementations of the present disclosure. GUI 430 may be similar to GUI 400, and similarly may be generated and/or rendered on a front end device 150. GUI 430 illustrates emphasizing a user interface element 416 upon receiving a user input selecting a recommended application action (e.g., in response to user selection of visual element 408 by moving mouse pointer 418 and clicking). The user is therefore guided to interact with the visual element 416 of the application itself.

In the example, emphasizing the actionable user interface element 416 can include visibly darkening the GUI 430 except the area of the GUI 430 corresponding to, or immediately surrounding, the actionable user interactive element 416. The darkening effect is shown in the difference between FIG. 4A and FIG. 4B in the region of the GUIs (400 and 430) excluding the visual element 416. As described herein, user interface elements may be emphasized in various other ways besides, or in addition to, the emphasis illustrated in FIG. 4B.

In addition to, or alternatively to, emphasized user interface elements, a user input corresponding to selecting the recommended action can facilitate execution of the recommended action. For example, and as described herein, in response to receiving the user input, the system can optionally additionally, or alternatively, execute the selected recommended action by opening a link included in the action and/or by applying action parameter values received by the back end system, among other actions than can be taken.

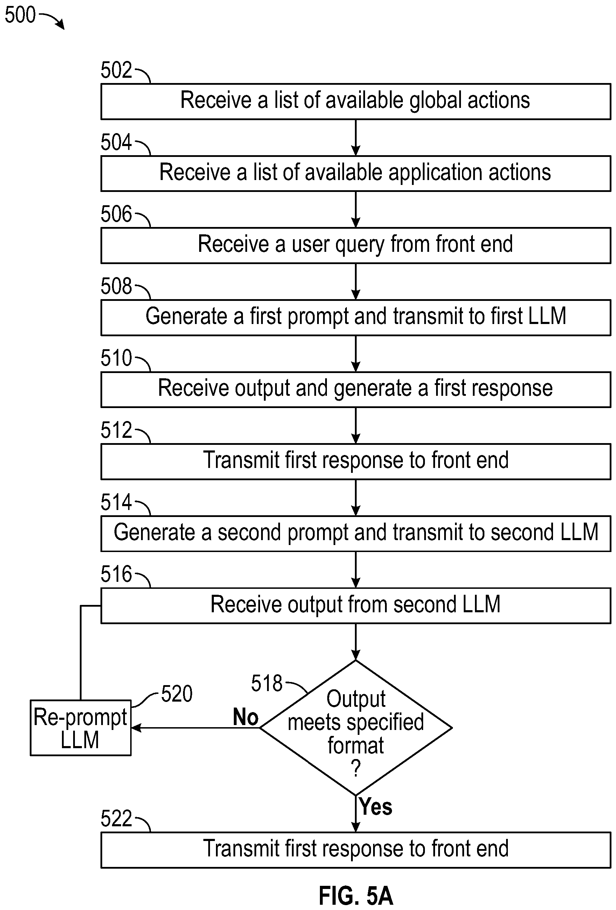

FIG. 5A is a flowchart 500 illustrating example operations and functionality of the system, according to various implementations of the present disclosure. The blocks of the flowchart illustrate example implementations, and in various other implementations various blocks may be rearranged, optional, and/or omitted, and/or additional blocks may be added. In various implementations, the example operations of the system illustrated in FIG. 5A may be implemented, for example, by the one or more aspects of the front end device 150, the back end system 102, various other aspects of the system and/or example computing environment 100, and/or the like.

At block 502, the back end system 102 can receive a list of available global actions from the front end device 150. Similarly, at block 504, the back end system can receive a list of available application actions from the front end device 150.

At block 506, a user query can be received, including a statement, question, or some combination thereof, through a user interacting with an interactive user interface panel of the assistant application. At block 508, the system can generate a first prompt including the user query, context, and instructions, and transmit the prompt to a first LLM 130a or 103b. The first LLM 130a can be contained within the back end system 102, or the first LLM 130b can be contained externally to the back end system 102. At block 510, the back end system can receive a first output from the first LLM (130a or 103b) corresponding to the first prompt. At block 512, the first output can be used to generate a first response which can be transmitted to the front end device 150 and displayed in the interactive user interface panel.

At block 514, the back end system 102 can generate a second prompt including the list of available global actions, the list of available application actions, and the user query. The second prompt can additionally include the first response, context, and instructions for directing the second LLM (130a or 103b) to generate a list of actions ranked by relevance to the context and the first response. The lists of available actions can further include various action definition information, as described herein, such as action parameters and action purposes for the actions, among other pieces of information.

At block 516, the back end system 102 can receive a second output from the second LLM (130a or 103b) and, at block 518, can parse the second output so as to identify if the second output is in the specified format, including actions and action parameter values, if applicable. If the parsed output does not meet the specified format, the system can proceed to block 520, where the system can re-prompt the second LLM (130a or 103b), including providing the second prompt to the LLM (130a or 103b) an additional time. After re-prompting the LLM 130a 130b, the system can proceed to block 516.

If, at block 518, the second output is determined to be in the specified format, a second response can be generated including a list of recommended actions, and the system can proceed to block 522, where the list of recommended actions can be transmitted to the front end device 150.

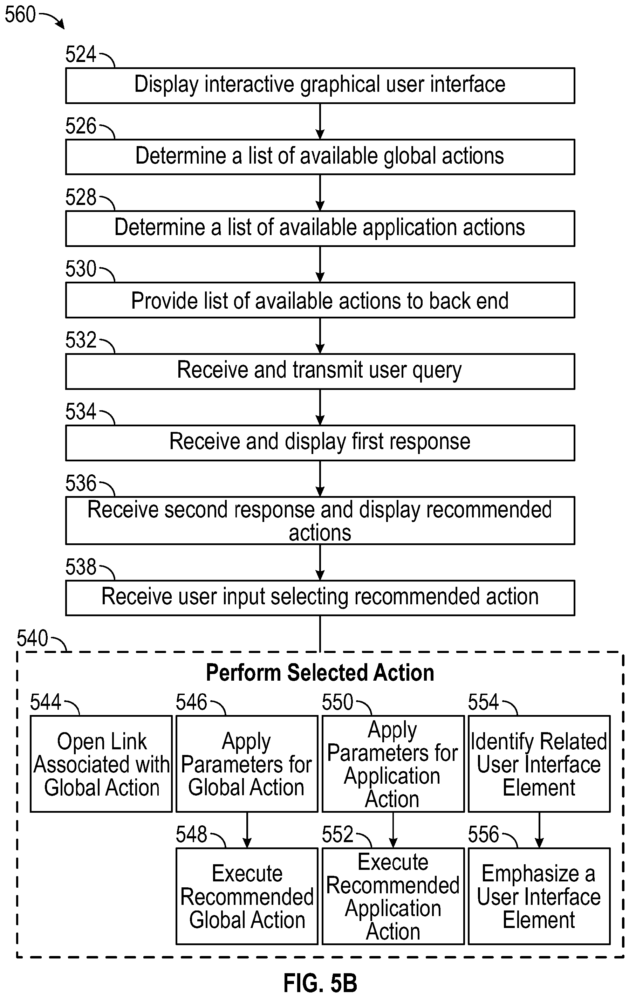

FIG. 5B is a flowchart 560 illustrating an additional example operations and functionality of the system, according to various implementations of the present disclosure. The blocks of the flowchart illustrate example implementations, and in various other implementations various blocks may be rearranged, optional, and/or omitted, and/or additional blocks may be added. In various implementations, the example operations of the system illustrated in FIG. 5B may be implemented, for example, by the one or more aspects of the front end device 150, the back end system 102, various other aspects of the system and/or example computing environment 100, and/or the like.

At block 524, the system can cause display of an interactive user interface panel (e.g., of the assistant application) on the front end device 150. At block 526, the system can determine a list of available global actions by querying a resource available to the assistant application and/or the front end device, where the resource can include the available application actions based on the context (e.g., for the software application viewed by the user, a current state of the software application, and/or the like). At block 528, a list of available application actions can be determined by the software application by identifying wrapper texts which include or reference mounted actionable user interface elements and identifying action definitions included in the identified wrapper texts.. The action definitions can be transmitted from the software application to the assistant application via a communications channel.

At block 530, both the list of available global actions and the list of available application actions can be provided to the back end system 102. In various implementations, the front end device 150 can provide the list of available global actions and the list of available application actions to the back end system 102 via a first communications channel.

At block 532, the front end device 150 can, via an interactive user interface panel (e.g., of the assistant application), receive a user query. The user query can be provided to the back end system 102 via a second communications channel.

At block 534, the front end device 150 can receive a first response from the back end system 102, where the first response can include a text reply which relates to the user query and additional content in a first prompt. The first response can be displayed in the interactive user interface panel (e.g., of the assistant application).

At block 536, the front end device 150 can receive a second response from the back end system 102, where the second response can include a list of recommended actions (including available application actions and available global actions) and action parameter values for application with the recommended actions. Additionally, at block 536, the recommended actions can be displayed as visual elements on the interactive user interface panel (e.g., of the assistant application).

At block 538, the front end device 150 can receive a user input selecting a recommended action, where the user input can include an identification of a visible element corresponding to a recommended action. The user input can include selecting a recommended action to be performed.

At block 540, in response to the user's selection of a recommended action, the system can perform the selected recommended action, which can be any of various types of actions.

For example, at block 544, the system can open a link associated with a selected global action. Block 544 can apply if the selected recommended action at block 538 was both a global action and corresponded to functionality which included opening a link associated with the global action.

As another example, at block 546, the system can apply action parameter values for a global action (e.g., input parameter values, and execute a function associated with the global action). Block 546 can apply if the selected recommended action at block 538 is a global action that includes a function with one or more action parameters. The one or more action parameter values can be received by from the back end system 102 and applied to the received action (which may be identified via the action identifier) to enable execution of the action. At block 548, the system can execute the global action.

As another example, at block 550, the system can apply action parameter values for a selected recommended application action (e.g., input parameter values, and execute a function associated with the application action). Block 550 can apply if the selected recommended action at block 538 is an application action that includes a function with one or more action parameters. The action parameter values can be received by from the back end system 102 and applied to the received action (which may be identified via the action identifier) to enable execution of the action. At block 552, the system can execute the application action.

As another example, at block 554, the system can identify an actionable user interface element associated with the selected recommended action. Block 554 can apply if the user input received at block 538 included selecting a recommended action to be emphasized. Furthermore, block 554 can apply if the selected recommended action at block 538 is an application action. At block 556, once the actionable user interface element is identified, the actionable user interface element can be emphasized (as described herein).

In various implementations, the prompts and responses (including to and from the LLM, and/or to and from the user interfaces) may be text, images, videos, other types or formats of data and/or media, and/or any combination of the foregoing and/or the like.

### Additional Example Implementations and Details

In various implementations of the system (e.g., one or more aspects of the model-based assistant system, one or more aspects of the computing environment 100, and/or the like) may comprise, or be implemented in, a "model-based assistant system". As used herein, the term "model-based assistant system" should be construed broadly to include, for example, computer-readable program instructions executed by one or more processors (e.g., as described in the example of FIG. 6) to implement one or more aspects of the modules and/or functionality described herein. Further, in this implementation, one or more services/modules/engines and/or the like of the system may be understood as comprising one or more rules engines of the model-based assistant system that, in response to inputs received by the model-based assistant system, execute rules and/or other program instructions to modify operation of the model-based assistant system. For example, a request received from a user computing device may be understood as modifying operation of the model-based assistant system to cause the request access to a resource from the system. Such functionality may comprise a modification of the operation of the model-based assistant system in response to inputs and according to various rules. Other functionality implemented by the model-based assistant system (as described throughout this disclosure) may further comprise modifications of the operation of the model-based assistant system, for example, the operation of the model-based assistant system may change depending on the information gathered by the system. Initial operation of the model-based assistant system may be understood as an establishment of the model-based assistant system. In various implementations the model-based assistant system may comprise one or more virtual machines, containers, and/or other types of emulations of computing systems or environments. In various implementations the model-based assistant system may comprise a hosted computing environment that includes a collection of physical computing resources that may be remotely accessible and may be rapidly provisioned as needed (commonly referred to as "cloud" computing environment).

Implementing one or more aspects of the system as a model-based assistant system may advantageously enable executing different aspects or modules of the system on different computing devices or processors, which may increase the scalability of the system. Implementing one or more aspects of the system as a model-based assistant system may further advantageously enable sandboxing various aspects, data, or services/modules of the system from one another, which may increase security of the system by preventing, e.g., malicious intrusion into the system from spreading. Implementing one or more aspects of the system as a model-based assistant system may further advantageously enable parallel execution of various aspects or modules of the system, which may increase the scalability of the system. Implementing one or more aspects of the system as a model-based assistant system may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application 106," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area (LAN) or a wide area network (WAN), or the connection may be made to an external computer (for example, through the Internet using an Internet Service Provider). In various implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In various alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in various implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 6 shows a block diagram that illustrates an example computer system 600 (or one or more computer systems 600) upon which various implementations and/or aspects (e.g., one or more aspects of the computing environment 100, one or more aspects of the front end device 150, one or more aspects of the back end system 102, one or more aspects of the network 140, one or more aspects of the LLM 130a and 130b, and/or the like) may be implemented. Multiple such computer systems 600 may be used in various implementations of the present disclosure. Computer system 600 includes a bus 602 or other communication mechanism for communicating information, and a hardware processor, or multiple processors. Hardware processor(s) 604 may be, for example, one or more general purpose microprocessors.

Computer system 600 also includes a main memory 606, such as a random-access memory (RAM), cache and/or other dynamic storage devices, coupled to bus 602 for storing information and instructions to be executed by processor 604. Main memory 606 also may be used for storing temporary variables or other intermediate information during execution of instructions to be executed by processor 604. Such instructions, when stored in storage media accessible to processor 604, render computer system 600 into a special-purpose machine that is customized to perform the operations specified in the instructions. The main memory 606 may, for example, include instructions to implement server instances, queuing modules, memory queues, storage queues, user interfaces, and/or other aspects of functionality of the present disclosure, according to various implementations.

Computer system 600 further includes a read only memory (ROM) 608 or other static storage device coupled to bus 602 for storing static information and instructions for processor 604. A storage device 610, such as a magnetic disk, optical disk, or USB thumb drive (Flash drive), and/or the like, is provided and coupled to bus 602 for storing information and instructions.

Computer system 600 may be coupled via bus 602 to a display 612, such as a cathode ray tube (CRT) or LCD display (or touch screen), for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane. In various implementations, the same direction information and command selections as cursor control may be implemented via receiving touches on a touch screen without a cursor.

Computer system 600 may include a user interface module 112 to implement a GUI that may be stored in a mass storage device as computer executable program instructions that are executed by the computing device(s). Computer system 600 may further, as described below, implement the techniques described herein using customized hard-wired logic, one or more ASICs or FPGAs, firmware and/or program logic which in combination with the computer system causes or programs computer system 600 to be a special-purpose machine. According to one implementation, the techniques herein are performed by computer system 600 in response to processor(s) 604 executing one or more sequences of one or more computer-readable program instructions contained in main memory 606. Such instructions may be read into main memory 606 from another storage medium, such as storage device 610. Execution of the sequences of instructions contained in main memory 606 causes processor(s) 604 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 604 for execution. For example, the instructions may initially be carried on a magnetic disk or solid-state drive of a remote computer. The remote computer can load the instructions into its dynamic memory and send the instructions over a telephone line using a modem. A modem local to computer system 600 can receive the data on the telephone line and use an infra-red transmitter to convert the data to an infra-red signal. An infra-red detector can receive the data carried in the infra-red signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card, cable modem, satellite modem, or a modem to provide a data communication connection to a corresponding type of telephone line. As another example, communication interface 618 may be a local area network (LAN) card to provide a data communication connection to a compatible LAN (or WAN component to communicated with a WAN). Wireless links may also be implemented. In any such implementation, communication interface 618 sends and receives electrical, electromagnetic, or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the worldwide packet data communication network now commonly referred to as the "Internet" 628. Local network 622 and Internet 628 both use electrical, electromagnetic, or optical signals that carry digital data streams. The signals through the various networks and the signals on network link 620 and through communication interface 618, which carry the digital data to and from computer system 600, are example forms of transmission media.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618.

The received code may be executed by processor 604 as it is received, and/or stored in storage device 610, or other non-volatile storage for later execution.

As described above, in various implementations certain functionality may be accessible by a user through a web-based viewer (such as a web browser), or other suitable software program). **In** such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications 106. **In** certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network 140 interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computer-implemented method for communicating with a front end device to generate application specific recommended actions, the computer-implemented method comprising, by one or more processors executing program instructions: receiving, from a front end device, a first list of available global actions; receiving, from the front end device, a second list of available application actions, wherein the available application actions are associated with a software application presented to a user; receiving, from the front end device, a user query provided by the user; generating a first prompt for a first large language model ("LLM"), wherein the first prompt includes the user query; transmitting the first prompt to the first LLM; receiving an output from the first LLM responsive to the first prompt; in response to receiving the output from the first LLM, providing a first response to the front end device for display to the user, wherein the first response is determined based on the output from the first LLM; generating a second prompt for a second LLM, wherein the second prompt includes: the user query, the first response, the first list of available global actions, and the second list of available application actions; transmitting the second prompt to the second LLM; receiving an output from the second LLM responsive to the second prompt; and in response to receiving the output from the second LLM: parsing the output from the second LLM to generate a third list of recommended actions; and providing a second response to the front end device for display to the user via a user interface, wherein the second response includes the third list of recommended actions selectable via the user interface to perform one or more of the recommended actions.

Clause 2. A computer-implemented method of Clause 1, wherein the front end device includes a client device rendering an interactive graphical user interface of the software application.

Clause 3. A computer-implemented method of Clause 1, wherein: the first list and the second list are received via a first communications channel with the front end device, and the user query is received via a second communications channel with the front end device.

Clause 4. A computer-implemented method of Clause 1, wherein the first LLM and the second LLM are the same LLM.

Clause 5. A computer-implemented method of Clause 1, wherein the first prompt further includes a context associated with the software application.

Clause 6. A computer-implemented method of Clause 5, wherein the second prompt further includes: the context associated with the software application, and an instruction to the second LLM to select one or more available global actions or available application actions associated with the user query or the first response.

Clause 7. A computer-implemented method of Clause 6, wherein: the second prompt further includes: an instruction to the second LLM to provide the output from the second LLM in a specified format, and parsing the output from the second LLM includes: determining that the output from the second LLM conforms to the specified format; and converting the output from the second LLM to generate the third list of recommended actions via parsing information from the output from the second LLM in the specified format.

Clause 8. A computer-implemented method of Clause 7 further comprising, by the one or more processors executing program instructions: determining that the output from the second LLM does not conform to the specified format; and in response to the determining that the output from the second LLM does not conform to the specified format, re-prompting the second LLM to provide a corrected output from the second LLM.

Clause 9. A computer-implemented method of Clause 7 further comprising, by the one or more processors executing program instructions: determining relevances of the recommended actions; and applying a threshold filter to the recommend actions based on the determined relevances.

Clause 10. The computer-implemented method of Clause 1, wherein the second list of the available application actions includes descriptors for the available application actions, and wherein a descriptor of the descriptors include at least one of: an application identifier, an action identifier, a display name, an action purpose or description, and one or more action parameters.

Clause 11. The computer-implemented method of Clause 10, wherein the one or more action parameters includes at least one of: data source identifier, database identifier, or a data type.

Clause 12. The computer-implemented method of Clause 1, wherein the third list of recommended actions includes at least a first recommend application action, and wherein the first recommended application action includes an indication usable for identifying a related user interface element of the software application.

Clause 13. The computer-implemented method of Clause 12, wherein the indication is further usable for causing emphasizing of the related user interface element in response to a user selection of the first recommended application action.

Clause 14. A system comprising: one or more computer-readable storage mediums comprising program instructions; and one or more processors configured to execute the program instructions to cause the system to perform the computer-implemented method of any of Clauses 1-13.

Clause 15. One or more computer-readable storage mediums comprising program instructions, the program instructions executable by one or more processors to cause the one or more processors to perform the computer-implemented method of any of Clauses 1-13.

Clause 16. A computer-implemented method for communicating with a back end system to generate application specific recommended actions, the computer-implemented method comprising, by one or more processors executing program instructions: causing display of an interactive graphical user interface to a user, the interactive graphical user interface including: a software application, and an interactive user interface panel; determining one or more available global actions; determining one or more available application actions, wherein determining the one or more available application actions includes: identifying indications of actionable user interface elements of the software application; providing, to a back end system, a first list of the available global actions; providing, to the back end system, a second list of available application actions; receiving, from the user and via the interactive user interface panel, a user query; transmitting the user query to the back end system; receiving, from the back end system, a first response to the user query; causing display, in the interactive user interface panel, of the first response; receiving, from the back end system, a second response to the user query, wherein the second response includes a third list of recommended actions; causing display, in the interactive user interface panel, of the recommended actions; receiving a user input, in the interactive user interface panel, selecting a first recommend application action of the recommended actions; and in response to receiving the user input, causing emphasizing of a user interface element, of the software application, identified by the first recommended application action.

Clause 17. A computer-implemented method of Clause 16 further comprising, by the one or more processors executing program instructions: receiving a second user input, in the interactive user interface panel, selecting a first recommend global action or a first recommended application action of the recommended actions; and in response to receiving the second user input: determining one or more action parameter values associated with the first recommended global action or first recommended application action; and perform or cause performance of the first recommended global action or first recommended application action using the determined one or more action parameter values.

Clause 18. A computer-implemented method of Clause 16 further comprising, by the one or more processors executing program instructions: determining a change to the software application; and in response to determining the change: re-determining one or more available application actions; and providing, to the back end system, an updated second list of available application actions based on said re-determining.

Clause 19. A computer-implemented method of Clause 16, wherein: the first list and the second list are transmitted via a first communications channel with the back end system, and the user query is transmitted via a second communications channel with the back end system.

Clause 20. A computer-implemented method of Clause 16, wherein: identifying the indications of actionable user interface elements of the software application includes querying a resource of the software application that provides a listing of the actionable user interface elements, and the indications of actionable user interface elements are user-definable using wrapper text on code of elements of the actionable user interface elements.

Clause 21. A system comprising: one or more computer-readable storage mediums comprising program instructions; and one or more processors configured to execute the program instructions to cause the system to perform the computer-implemented method of any of Clauses 16-20.

Clause 22. One or more computer-readable storage mediums comprising program instructions, the program instructions executable by one or more processors to cause the one or more processors to perform the computer-implemented method of any of Clauses 16-20.

## Claims

1. A computer-implemented method for communicating with a front end device to generate application specific recommended actions, the computer-implemented method comprising, by one or more processors executing program instructions:
receiving, from a front end device, a first list of available global actions;
receiving, from the front end device, a second list of available application actions, wherein the available application actions are associated with a software application presented to a user;
receiving, from the front end device, a user query provided by the user;
generating a first prompt for a first large language model ("LLM"), wherein the first prompt includes the user query;
transmitting the first prompt to the first LLM;
receiving an output from the first LLM responsive to the first prompt;
in response to receiving the output from the first LLM, providing a first response to the front end device for display to the user, wherein the first response is determined based on the output from the first LLM;
generating a second prompt for a second LLM, wherein the second prompt includes: the user query, the first response, the first list of available global actions, and the second list of available application actions;
transmitting the second prompt to the second LLM;
receiving an output from the second LLM responsive to the second prompt; and
in response to receiving the output from the second LLM:
parsing the output from the second LLM to generate a third list of recommended actions; and
providing a second response to the front end device for display to the user via a user interface, wherein the second response includes the third list of recommended actions selectable via the user interface to perform one or more of the recommended actions.

2. A computer-implemented method of Claim 1, wherein the front end device includes a client device rendering an interactive graphical user interface of the software application.

3. A computer-implemented method of Claim 1, wherein:
the first list and the second list are received via a first communications channel with the front end device, and
the user query is received via a second communications channel with the front end device.

4. A computer-implemented method of Claim 1, wherein the first LLM and the second LLM are the same LLM.

5. A computer-implemented method of Claim 1, wherein the first prompt further includes a context associated with the software application.

6. A computer-implemented method of Claim 5, wherein the second prompt further includes: the context associated with the software application, and an instruction to the second LLM to select one or more available global actions or available application actions associated with the user query or the first response.

7. A computer-implemented method of Claim 6, wherein:
the second prompt further includes: an instruction to the second LLM to provide the output from the second LLM in a specified format, and
parsing the output from the second LLM includes:
determining that the output from the second LLM conforms to the specified format; and
converting the output from the second LLM to generate the third list of recommended actions via parsing information from the output from the second LLM in the specified format.

8. A computer-implemented method of Claim 7 further comprising, by the one or more processors executing program instructions:
determining that the output from the second LLM does not conform to the specified format; and
in response to the determining that the output from the second LLM does not conform to the specified format, re-prompting the second LLM to provide a corrected output from the second LLM.

9. A computer-implemented method of Claim 7 further comprising, by the one or more processors executing program instructions:
determining relevances of the recommended actions; and
applying a threshold filter to the recommend actions based on the determined relevances.

10. The computer-implemented method of Claim 1, wherein the second list of the available application actions includes descriptors for the available application actions, and wherein a descriptor of the descriptors include at least one of:
an application identifier,
an action identifier,
a display name,
an action purpose or description, and
one or more action parameters.

11. The computer-implemented method of Claim 10, wherein the one or more action parameters includes at least one of: data source identifier, database identifier, or a data type.

12. The computer-implemented method of Claim 1, wherein the third list of recommended actions includes at least a first recommend application action, and wherein the first recommended application action includes an indication usable for identifying a related user interface element of the software application.

13. The computer-implemented method of Claim 12, wherein the indication is further usable for causing emphasizing of the related user interface element in response to a user selection of the first recommended application action.

14. A system comprising:
one or more computer-readable storage mediums comprising program instructions; and
one or more processors configured to execute the program instructions to cause the system to perform the computer-implemented method of any of Claims 1-13.

15. One or more computer-readable storage mediums comprising program instructions, the program instructions executable by one or more processors to cause the one or more processors to perform the computer-implemented method of any of Claims 1-13.
